# EUROPÄISCHE PATENTANMELDUNG

(11) **EP 0 675 623 A2**
(43) Veröffentlichungstag der Anmeldung: **04.10.1995**
(21) Anmeldenummer: 95100730.1
(22) Anmeldetag: 20.01.1995
(51) Int. Cl.: H04M 1/03, H04M 1/62

(54) **Ausbildung von einem Telekommunikations-Endgerät zur Nutzung des Handapparate-Mikrofons als Freisprechmikrofon**

(30) Priorität: 28.03.1994 DE 4411322
(71) Anmelder: DETEWE - DEUTSCHE TELEPHONWERKE Aktiengesellschaft & Co., D-10997 Berlin (DE)
(72) Erfinder: Baumeister, Rolf, D-10551 Berlin (DE); Jankowsky, Florian, D-10589 Berlin (DE); Neuhaus, Hans-Jürgen, D-12161 Berlin (DE)

(57) **Zusammenfassung**

Für Telekommunikations-Endgeräte wird eine Ausbildung der Gehäusekappe und der Einsprachemuschel des Handapparates in der Weise vorgeschlagen, daß bei aufgelegtem Handapparat dessen Mikrofon als Freisprechmikrofon nutzbar ist.

## Beschreibung

Die Erfindung betrifft die Ausbildung von Telekommunikations-Endgeräten zur Nutzung des Handapparate-Mikrofons als Freisprechmikrofon bei aufgelegtem Handapparat auf die Kappe des Endgerätes.

In modernen Handapparaten von Telekommunikations-Endgeräten werden Elektret-Mikrofone eingesetzt (DE-G 94 02 011). Diese können unter gewissen Voraussetzungen als Freisprechmikrofone genutzt werden. Wenn z. B. Sprechschaltungen mit sprachgesteuerten Lauthörverstärkern in den Endgeräten verwendet werden, kann ein Freisprechen über das Handapparate-Mikrofon durch ein einfaches Erhöhen der Sendeverstärkung des Mikrofonkanals und Aktivieren der Lauthörsprachsteuerung realisiert werden.

Bei einer Lösung der Freisprechfunktion ohne sprachgesteuertes Lauthören wird das Mikrofonsignal des Handapparate-Mikrofons dem Mikrofonverstärker des Handapparatekanals und dem Mikrofonverstärker des Freisprechkanals zugeführt.

Unter diesen Voraussetzungen ist die Nutzung des Handapparate-Mikrofons als Freisprechmikrofon möglich. Für das Freisprechen ist zudem eine eindeutige Lage des Handapparates auf dem Endgerät notwendig, um eine entsprechende Schallführung in Richtung der Einspracheöffnung des Handapparate-Mikrofons zu bewirken.

Aufgabe der vorliegenden Erfindung war es, konstruktive Maßnahmen zu schaffen, die unter Berücksichtigung der Schallführung bei aufgelegtem Handapparat die Nutzung des Handapparate-Mikrofons als Freisprechmikrofon gestatten.

Diese Aufgabe ist durch die Erfindung gelöst, wie sie im Kennzeichnungsteil des ersten Patentanspruches dargelegt ist. Weitere vorteilhafte Maßnahmen sind in den Unteransprüchen beschrieben.

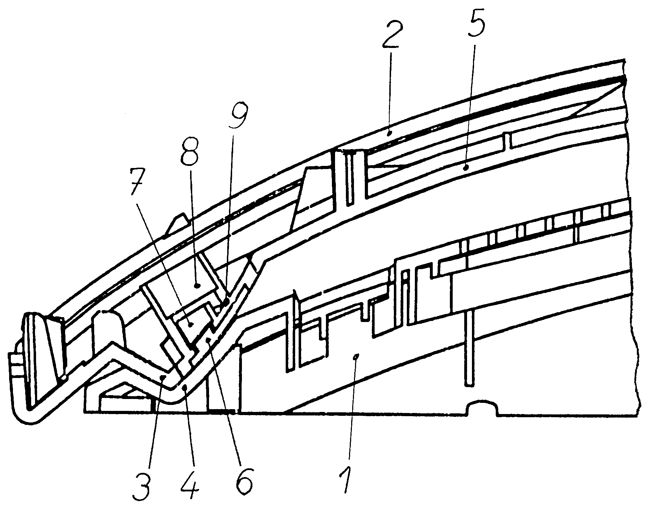

Die Erfindung wird anhand einer Zeichnung näher erläutert. Die Zeichnung stellt einen Schnitt durch einen Teil einer Kappe 1 eines Telekommunikations-Endgerätes mit aufgelegtem Handapparat 2 dar. Die Kappe 1 ist im Bereich der Aufnahme für die Einsprachemuschel 3 des Handapparates 2 als Mulde 4 ausgebildet. Die Einsprachemuschel 3 ist an ihrem dem Griffteil 5 des Handapparates 2 zugewandten Ende mit Schalleintrittsöffnungen 6 versehen, die über eine Vorkammer 7 den Schall an das Mikrofon 8 leiten. Die Größe der Vorkammer 7 ist zur Einhaltung geforderter Akustikwerte auf das Volumen der Kammer für die Aufnahme des Mikrofons 8 abgestimmt.

Die Schalleintrittsöffnungen 6 sind schlitzförmig gestaltet. Dabei ist mindestens eine Schalleintrittsöffnung 6 in ihrem Abmaßen derart ausgeführt, daß sie die Mulde 4 der Kappe 1 deutlich überragt. Hierdurch ergibt sich ein freier Raum zwischen Oberfläche der Kappe 1 und Schalleintrittsöffnung 6. Damit ist eine Schallreflexion von der Oberfläche der Kappe 1 in das Mikrofon 8 bei aufgelegtem Handapparat 2 und eingeschalteter Freisprechfunktion des Endgerätes gewährleistet.

Um eine optimale Schallführung zum Mikrofon 8 zu erzielen, ist die schlitzförmige Schalleintrittsöffnung 6 mit einem Steg 9 hinterlegt.

## Patentansprüche

1. Ausbildung von Telekommunikations-Endgeräten zur Nutzung des Handapparate-Mikrofons als Freisprechmikrofon bei aufgelegtem Handapparat auf die Kappe des Endgerätes, dadurch gekennzeichnet, daß eine Mulde (4) der Kappe (1) zur Aufnahme des Handapparates (2) und Schalleintrittsöffnungen (6) der Einsprachemuschel (3) des Handapparates (2) konstruktiv derart ausgebildet sind, daß mindestens eine Schalleintrittsöffnung (6) die Mulde (4) soweit überragt, daß ein freier Raum zwischen Oberfläche der Kappe (1) und der Schalleintrittsöffnung (6) gebildet ist.

2. Ausbildung nach Anspruch 1, dadurch gekennzeichnet, daß die Schalleintrittsöffnungen (6) schlitzförmig gestaltet sind.

3. Ausbildung nach Anspruch 1 und 2, dadurch gekennzeichnet, daß die Schalleintrittsöffnungen (6) mit einem Steg (9) hinterlegt sind.
